(19) Europäisches Patentamt
European Patent Office
Office européen des brevets

(11) Veröffentlichungsnummer: **0 584 565 A1**

(12) **EUROPÄISCHE PATENTANMELDUNG**

(21) Anmeldenummer: **93112043.0**

(22) Anmeldetag: **28.07.93**

(51) Int. Cl.5: **C09B 62/51**, C08G 18/38, C09B 29/08

(30) Priorität: **10.08.92 DE 4226374**

(43) Veröffentlichungstag der Anmeldung: **02.03.94 Patentblatt 94/09**

(84) Benannte Vertragsstaaten: **CH DE FR GB LI**

(71) Anmelder: **BAYER AG**
**D-51368 Leverkusen(DE)**

(72) Erfinder: **Roschger, Peter, Dr.**
**Amdamsstrasse 24**
**D-51063 Köln(DE)**
Erfinder: **Herd, Karl-Josef, Dr.**
**Am Gartenfeld 66**
**D-51519 Odenthal(DE)**

# (54) Verfahren zum Färben von Polyurethankunststoffen mit Monoazoeinbaufarbstoffen sowie neue Monoazofarbstoffe.

(57) Es wird die Verwendung zum Färben von Polyurethankunststoffen mit Monoazofarbstoffen beschrieben, die zum Einbau in den Kunststoff unter Ausbildung kovalenter Bindungen geeignet sind und sich durch die Formel

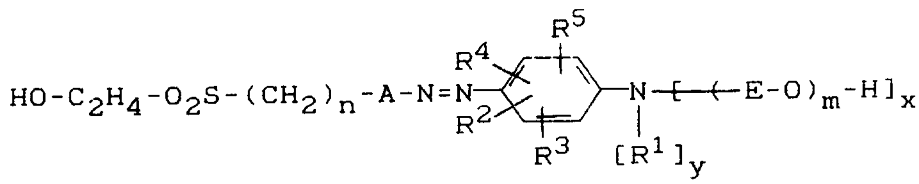

beschreiben lassen, als auch neue Monoazofarbstoffe der Formel

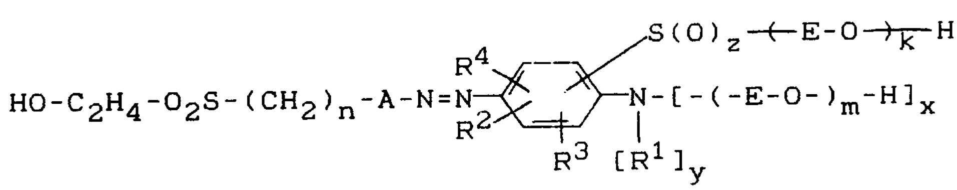

worin

| | |
|---|---|
| A | für gegenenfalls durch Alkyl oder Halogen substituiertes Phenylen oder Naphthylen steht, |
| E | für $C_1$-$C_4$-Alkylen steht, |
| $R^1$ | für Wasserstoff oder für einen $C_1$-$C_6$-Alkylenrest, der gegebenenfalls durch -C1, -CN, Amino, Alkylamino, Dialkylamino, $C_1$-$C_4$-Alkoxycarbonyl, Aminocarbonyl und/oder Phenyl substituiert ist, steht, |
| $R^2$, $R^3$, $R^4$ und $R^5$ | unabhängig voneinander für Wasserstoff, Halogen, Hydroxy, Amino, Acylamino, $C_1$-$C_6$-Alkyl oder gegebenenfalls durch Hydroxy oder $C_1$-$C_4$-Alkylenoxideinheiten substituiertes $C_1$-$C_6$-Alkoxy, mono- oder di-$C_1$-$C_6$-Alkylamino, $C_1$-$C_6$-Alkylthio, $C_1$-$C_6$-Alkylsulfoxid |

EP 0 584 565 A1

oder $C_1$-$C_6$-Alkylsulfonyl stehen oder zwei dieser Reste einen ankondensierten Bensolring vervollständigen, der gegebenenfalls substituiert ist,

| | |
|---|---|
| m | für eine Zahl von 1 bis 4, |
| n | für eine Zahl von 0 bis 2, |
| x | für 1 oder 2, |
| y | für 0 oder 1 steht, |

wobei die Summe aus x und y gleich 2 ist.

Die Erfindung betrifft ein Verfahren zum Färben von Polyurethankunststoffen mit Monoazofarbstoffen, die zum Einbau in den Kunststoff unter Ausbildung kovalenter Bindungen geeignet sind. Einbaufarbstoffe für Polyurethankunststoffe sind beispielsweise aus US-4 751 254 und GB-A-1 472 379 bekannt, weisen aber hinsichtlich der Erfordernisse, die an sie gestellt werden gewisse Nachteile auf. Nun wurde ein Verfahren zum Färben von Polyurethankunststoffen mit Farbstoffen gefunden, dadurch gekennzeichnet, daß man vor oder während der Polyadditionsreaktion dem Reaktionsgemisch oder einer der Eddukt-Komponenten wenigstens einen Farbstoff der Formel

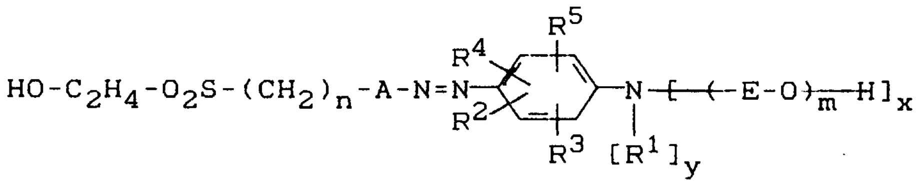

(I)

zusetzt,
worin

| | |
|---|---|
| A | für gegebenenfalls durch Alkyl oder Halogen substituiertes Phenylen oder Naphthylen, |
| E | für $C_1$-$C_4$-Alkylen steht, |
| $R^1$ | für Wasserstoff oder für einen $C_1$-$C_6$-Alkylenrest, der gegebenenfalls durch -Cl, -CN, Amino, Alkylamino, Dialkylamino, $C_1$-$C_4$-Alkoxycarbonyl, Aminocarbonyl und/oder Phenyl substituiert ist, steht, |
| $R^2$, $R^3$, $R^4$ und $R^5$ | unabhängig voneinander für Wasserstoff, Halogen, Hydroxy, Amino, Acylamino, $C_1$-$C_6$-Alkyl oder gegebenenfalls durch Hydroxy oder $C_1$-$C_4$-Alkylenoxideinheiten substituiertes $C_1$-$C_6$-Alkoxy, mono- oder di-$C_1$-$C_6$-Alkylamino, $C_1$-$C_6$-Alkylthio, $C_1$-$C_6$-Alkylsulfoxid oder $C_1$-$C_6$-Alkylsulfonyl stehen oder zwei dieser Reste einen ankondensierten Benzolring vervollständigen, der gegebenenfalls substituiert ist, |
| m | für eine Zahl von 1 bis 4, vorzugsweise 1 oder 2, |
| n | für eine Zahl von 0 bis 2, |
| x | für 1 oder 2, |
| y | für 0 oder 1, |

wobei die Summe aus x und y gleich 2 ist.

Von besonderem Interesse ist dabei ein Verfahren unter Verwendung von Farbstoffen der Formel

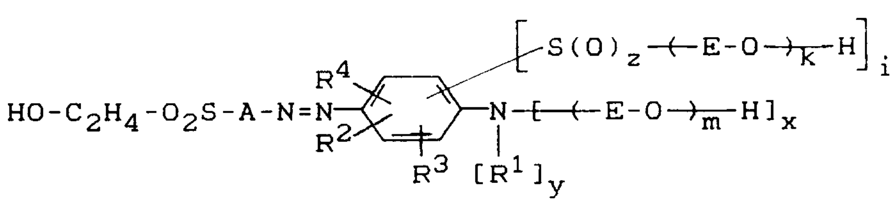

(II)

worin

| | |
|---|---|
| A | für 1,2-, 1,3- oder 1,4-Phenylen oder 2,6-Naphthylen steht, das gegebenenfalls durch Methyl, Ethyl, Chlor oder Brom substituiert ist, |
| $R^2$, $R^3$ und $R^4$ | unabhängig voneinander für Wasserstoff, Methyl, Ethyl, n-Propyl, iso-Propyl, Chlor, Acylamino oder Methoxy stehen, |
| i | die Zahl 0 oder 1, |
| k | eine Zahl von 1 bis 4, |
| z | eine Zahl von 0 bis 2 bedeuten |

und

| | |
|---|---|
| E, $R^1$, m, x und y | die oben genannten Bedeutungen besitzen. |

In einer ganz besonders bevorzugten Verfahrensvariante verwendet man zum Färben von Polyurethankunststoffen Farbstoffe der Formel

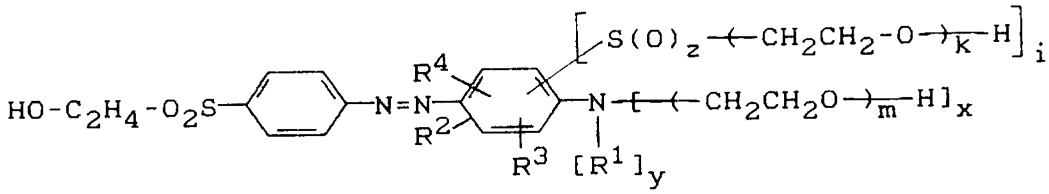

(III)

worin

| | |
|---|---|
| $R^1$ | für Wasserstoff, Methyl, Ethyl, Benzyl oder 2-Cyanoethyl steht und |
| $R^2$, $R^3$ und $R^4$ | unabhängig voneinander für Wasserstoff, Methyl, Ethyl, Methoxy, Acetylamino oder Chlor stehen und |
| k | eine Zahl von 1 bis 4, vorzugsweise von 1 bis 2 bedeutet, |
| m | eine Zahl von 1 bis 4, vorzugsweise von 1 bis 2 bedeutet |

und i, x, y und z die oben angeführten Bedeutungen haben.

Weiterer Gegenstand der Erfindung sind neue Monoazofarbstoffe der Formel

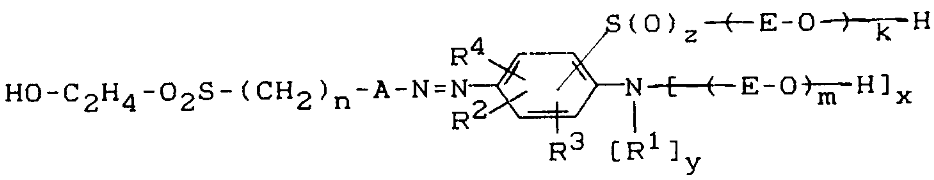

(VI)

worin

| | |
|---|---|
| A | für gegebenenfalls durch Alkyl oder Halogen substituiertes Phenylen oder Naphthylen, |
| E | für $C_1$-$C_4$-Alkylen steht, |
| $R^1$ | für Wasserstoff oder für einen $C_1$-$C_6$-Alkylenrest, der gegebenenfalls durch -Cl, -CN, Amino, Alkylamino, Dialkylamino, $C_1$-$C_4$-Alkoxycarbonyl, Aminocarbonyl und/oder Phenyl substituiert ist, steht, |
| $R^2$, $R^3$ und $R^4$ | unabhängig voneinander für Wasserstoff, Halogen, Hydroxy, Amino, Acylamino, $C_1$-$C_6$- Alkyl oder gegebenenfalls durch Hydroxy oder $C_1$-$C_4$-Alkylenoxideinheiten substituiertes $C_1$-$C_6$-Alkoxy, mono- oder di-$C_1$-$C_6$-Alkylamino, $C_1$-$C_6$- Alkylthio, $C_1$-$C_6$-Alkylsulfoxid oder $C_1$-$C_6$-Alkylsulfonyl stehen oder zwei dieser Reste einen ankondensierten Benzolring vervollständigen, der gegebenenfalls substituiert ist, |
| m | für eine Zahl von 1 bis 4, |
| n | für eine Zahl von 0 bis 2, |
| x | für 1 oder 2, |
| y | für 0 oder 1 steht, |
| z | für 0, 1 oder 2, |
| k | für eine Zahl von 1 bis 4 steht, |

wobei die Summe aus x und y gleich 2 ist,
mit Ausnahme der Farbstoffe

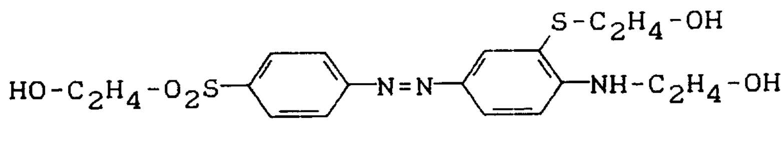

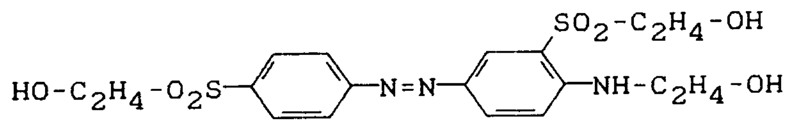

Bevorzugte Ausführungsformen sind Farbstoffe der Formel

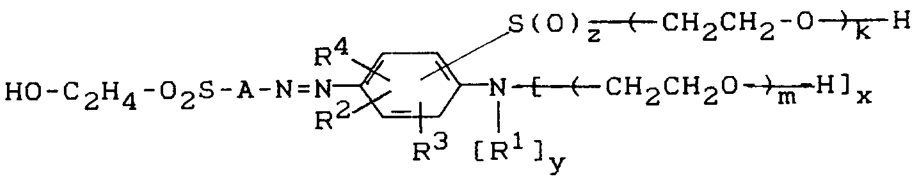

(VII)

worin

| | |
|---|---|
| A | für 1,2-, 1,3- oder 1,4-Phenylen oder 2,6-Naphthylen steht, das gegebenenfalls durch Methyl, Ethyl, Chlor oder Brom substituiert ist, |
| $R^1$ | für Wasserstoff oder für einen $C_1$-$C_6$-Alkylenrest, der gegebenenfalls durch -Cl, -CN, Amino, Alkylamino, Dialkylamino, $C_1$-$C_4$-Alkoxycarbonyl, Aminocarbonyl und/oder Phenyl substituiert ist, steht, |
| $R^2$, $R^3$ und $R^4$ | unabhängig voneinander für Wasserstoff, Methyl, Ethyl, n-Propyl, iso-Propyl, Chlor, Acylamino oder Methoxy stehen, |
| k | eine Zahl von 1 bis 4, |
| z | eine Zahl von 0 bis 2, |
| m | für eine Zahl von 1 bis 4, |
| x | für 1 oder 2 und |
| y | für 0 oder 1 steht. |

Eine besonders bevorzugte Ausführungsform sind erfindungsgemäße Farbstoffe der Formel

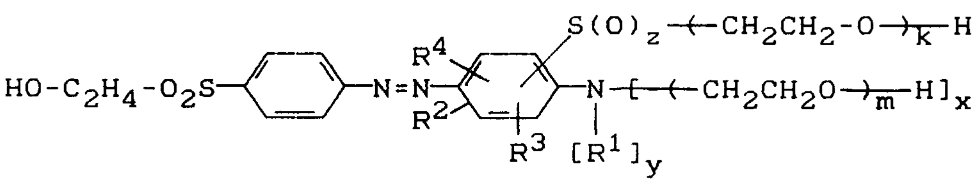

(VIII)

worin

| | |
|---|---|
| $R^1$ | für Wasserstoff, Methyl, Ethyl, Benzyl oder 2-Cyanoethyl steht und |
| $R^2$, $R^3$ und $R^4$ | unabhängig voneinander für Wasserstoff, Methyl, Ethyl, Methoxy, Acetylamino oder Chlor stehen und |
| k | eine Zahl von 1 bis 4, vorzugsweise von 1 bis 2 |
| z | eine Zahl von 0 bis 2, |

m für eine Zahl von 1 bis 4, vorzugsweise von 1 bis 2,
x für 1 oder 2 und
y für 0 oder 1 steht.

Die Farbstoffe können beispielsweise durch Kuppeln diazotierter Amine der Formel

$$HO\text{-}C_2H_4\text{-}O_2S\text{—}(CH_2)_n\text{—}A\text{—}NH_2 \quad (IV),$$

in der A und n die oben genannten Bedeutungen besitzen, auf Kupplungskomponenten der Formel

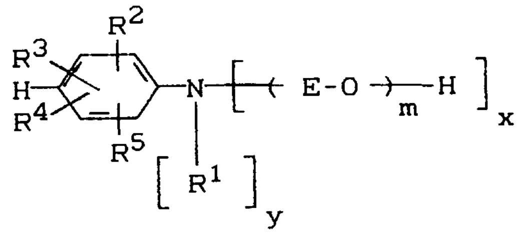
(V) ,

in der E, $R^1$, $R^2$, $R^3$, $R^4$, $R^5$, m, x und y die oben angeführten Bedeutungen haben, nach an sich üblichen Verfahren hergestellt werden, wie beispielsweise in US-4 271 072 beschrieben.

Kupplungskomponenten der Formel V können auch als Mischungen mit statistisch verteilten Alkylenoxideinheiten vorliegen, wie sie beispielsweise bei der Umsetzung von primären oder sekundären aromatischen Aminen mit Alkylenoxiden erhalten werden.

Farbstoffe der Formel II bzw. III, in denen i gleich 1 und z gleich 1 oder 2 ist bzw. Farbstoffe der Formeln VI, VII und VIII, in denen z gleich 1 oder 2 ist, lassen sich durch Oxidation von Farbstoffen der Formel II bzw. III, in denen i gleich 1 und z gleich 0 ist bzw. von Farbstoffen der Formeln VI, VII und VIII, in denen z gleich 0 ist, mit Oxidationsmitteln wie z.B. Wasserstoffperoxid, Peressigsäure usw. gegebenenfalls in Gegenwart von Oxidationskatalysatoren (z.B. Wolfram-VI-oxid, Natriumwolframat usw.) bei Temperaturen von 0-100 °C darstellen. Führt man die Oxidation in Wasser als Lösungsmittel durch, so kann man bei pH-Werten von 0 - 10 arbeiten, vorzugsweise bei pH 2 bis 10, gegebenenfalls unter Zusatz eines Puffersystems wie z.B. Essigsäure/Natriumacetat.

Das erfindungsgemäße Verfahren zum Färben von Polyurethankunststoffen wird im allgemeinen so durchgeführt, daß der Farbstoff der Formel (I) in einer geeigneten Form vor oder während der Polyurethanbildung entweder der Polyol- oder Polyisocyanatkomponente oder dem Reaktionsgemisch zugegeben wird. Die weitere Reaktion wird in üblicher Weise, d.h. wie für nicht gefärbte Polyurethankunststoffe durchgeführt. Angaben dazu sind beispielsweise G. Oertel, Kunststoff-Handbuch B. 7, Polyurethane, Hanser, München, Wien 1983; engl. Ausgabe 1985 zu entnehmen.

Die Farbstoffe können in Substanz als Farbstoffpulver oder Granulat, zweckmäßiger jedoch als Lösung oder Dispersion in einem geeigneten Lösungs- oder Dispergiermedium zugegeben werden, wobei sowohl die Einzelfarbstoffe als auch Farbstoffmischungen geeignet sind.

Die nach dem erfindungsgemäßen Verfahren gefärbten Polyurethankunststoffe können den verschiedensten Anwendungszwecken dienen, beispielsweise als Preßkörper, Folien, Fasern, Schaumstoffe, Lacke und Beschichtungsmaterialien.

Die Polyurethane können neben den charakteristischen Urethangruppierungen im Makromolekül auch noch andere funktionelle Gruppen wie Amid-, Harnstoff- oder Carbodiimidgruppen aufweisen.

Für die Schaumstoffherstellung haben sich Lösungen oder Dispersionen in hochsiedenden organischen Flüssigkeiten, beispielsweise aliphatischen oder aromatischen Estern der Phosphorsäure, Phosphonsäure, Phthalsäure oder Adipinsäure wie Diphenylisopropyl-, Diphenylkresyl-, Diphenyloctyl-, Trichlorethyl- und Tributylphosphat oder Dioctyl-, Butylbenzyl- und Dibutylphthalat oder Dioctyl- und Octylbenzyladipat, Lactonen, beispielsweise Butyrolacton, Alkoholen, insbesondere flüssigen Polyalkoholen, beispielsweise Octaethylenglykol und Kondensationsprodukten aus Adipinsäure und Butandiol-1,3 oder Propylenglykol-1,2, Ketone oder Ether, mit Siedepunkten über 180 °C und Dampfdrucken unter 1 mbar bei 20 °C bewährt.

Die so gefärbten Polyurethanschaumstoffe können sowohl Weich-, Halbhart- oder Hartschäumen als auch sogenannten Polyurethanintegralschaumstoffe sein.

Die nach dem erfindungsgemäßen Verfahren gefärbten Polyurethan-Thermoplasten, die zur Herstellung von Formteilen durch Spritzgießen, Extrudieren oder Kalandrieren eingesetzt werden, werden vorzugsweise erhalten, indem man den Farbstoff, gelöst oder dispergiert in einem Polyol oder einem als Kettenverlängerer verwendeten Diol, der Reaktionsmischung oder einer der Komponenten, bevorzugt der Polyolverbindung zusetzt.

Als Polyole kommen sowohl Hydroxylgruppen aufweisende Polyester, insbesondere Umsetzungsprodukte von 2-wertigen Alkoholen mit 2-wertigen Carbonsäuren und Hydroxylgruppen aufweisende Polyether, insbesondere Anlagerungsprodukte von Ethylenoxid, Propylenoxid, Styroloxid oder Epichlorhydrin an Wasser, Alkohole oder Amine, bevorzugt Dialkohole, in Frage.

Kettenverlängernde Diole sind beispielsweise Ethylenglykol, Diethylenglykol, Butandiol, Hexandiol, Octandiol und Hydrochinon-$\beta$-dihydroxyethylether.

Werden zur Herstellung des thermoplastischen Polyurethans auch Monoalkohole oder Monoamine eingesetzt, so kann der Farbstoff auch in diesen Reagenzien gelöst oder dispergiert werden. Als Monoalkohole kommen z.B. Hexanol, Octanol, Nonylalkohol oder Isooctanol in Frage.

Die nach dem erfindungsgemäßen Verfahren mit Farbstoffen der Formel (I) gefärbten Polyurethansysteme eignen sich weiterhin für die Textilbeschichtung. Die gefärbten Polyurethane können dabei als Pulver, Lösungen, Granulate oder Dispersionen zur Anwendung kommen. Chemische und anwendungstechnische Einzelheiten können der Fachliteratur, z.B. Melliand Textilberichte 53, 1272 bis 1277 (1972); 52, 1094 bis 1099 (1971); 51, 1313 bis 1317 (1970), entnommen werden.

Bei Beschichtungspulvern wird der dem erfindungsgemäßen Verfahren zu verwendende Farbstoff am zweckmäßigsten in der Polyolkomponente dispergiert, bevor ein Prepolymer durch Reaktion mit einem Diisocyanat hergestellt wird, das in der letzten Stufe unter Kettenverlängerung mit einem Diamin zu einem gefärbten, rieselfähigen, thermoplastischen Polyurethanpulver umgesetzt wird.

Bei den Lösungen der Einkomponenten-Polyurethan-Beschichtungsmassen und bei den wäßrigen Dispersionen wird der Farbstoff bei der Polyurethanherstellung am einfachsten der Polyolkomponente zugesetzt und bei der Reaktion mit dem Diisocyanat in das Polyurethanmolekül eingebaut. Bei Zweikomponenten-Polyurethantextilbeschichtungsmassen kann der Farbstoff entweder in das vernetzbare Polyurethan eingebaut werden oder als Paste, dispergiert in einem geeigneten Medium, beispielsweise einer Lösung eines Polyesterpolyurethans in Methylethylglykol/Toluol, dem vernetzbaren Polyurethan zugemischt werden, wobei der Einbau des Farbstoffs sich in der letzten Reaktionsstufe bei der Umsetzung mit einem Diisocyanat vollzieht.

Polyurethan-Elastomere, aus denen sich Elastomerfäden nach üblichen Verfahren herstellen lassen, können mit Farbstoffen der Formel (I) gefärbt werden.

Dazu wird der Farbstoff in der Dihydroxykomponente fein verteilt, bevor durch Umsetzung mit einem Diisocyanat ein NCO-gruppenhaltiges Prepolymer hergestellt wird, in das der Farbstoff chemisch eingebaut ist.

Durch Umsetzung mit einem als Kettenverlängerer dienenden Diamin wird in Lösung aus dem Prepolymer eine Polyurethan-Elastomerlösung erhalten, die nach dem Trocken- oder Naßspinnprozeß zu Fäden, aber auch durch Aufstreichen der Elastomerlösung auf Glasplatten und Auftrocknen beispielsweise während 30 Minuten bei 70 °C und 45 Minuten bei 100 °C zu Filmen verarbeitet werden kann.

Einzelheiten zur Herstellung von Polyurethan-Elastomerlösungen können beispielsweise der Deutschen Offenlegungsschrift DE-A-1 962 602 entnommen werden.

Das Verfahren zur Einfärbung von Polyurethanlacken mit Farbstoffen der Formel (I) wird zweckmäßigerweise so durchgeführt, daß der Farbstoff in der Lösung, die die Polyisocyanat- und Polyolkomponente enthält, gelöst wird. Sodann wird der angefärbte Lack auf die zu lackierende Fläche aufgetragen und beispielsweise 30 Minuten bei 180 °C eingebrannt, wobei der Farbstoff sehr überlackier- und ausblutecht eingebaut ist.

Die Farbstoffe werden in allen Anwendungen zweckmäßig in einer Konzentration von 0,005 bis 1,0 Gew.-%, bevorzugt 0,05 bis 0,5 Gew.-%, bezogen auf die Polyolkomponente, eingesetzt.

Nach dem erfindungsgemäßen Verfahren werden gelb bis rot gefärbte Polyurethankunststoffe der verschiedensten Anwendungsgebiete erhalten, die sich durch ein sehr gutes Echtheitsniveau auszeichnen.

Gegenüber den in GB-A-1 472 379 und US-4 751 254 beschriebenen Farbstoffen besitzen die erfindungsgemäßen Farbstoffe ein deutlich verbessertes Einbauvermögen bei hervorragender Thermostabilität und Fotostabilität.

Die Prozent-Angaben der Beispiele bedeuten Gewichtsprozente, Teile bedeuten Gewichtsteile.

## Beispiele

### Beispiel 1

a) Eine Mischung, bestehend aus 10,0 % des Farbstoffes der Formel

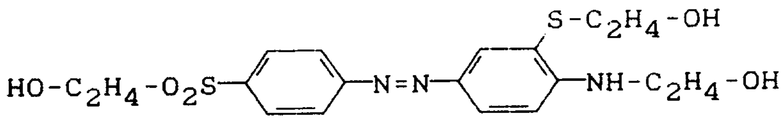

($\lambda_{max}$ = 448 nm ($H_2O$))

13,5 % Butylbenzylphthalat und 76,5 % eines Kondensationsproduktes aus Adipinsäure und Propylenglykol(1,2) mit einer Hydroxylzahl von 112 bis 113 und einer Säurezahl von 0,31 wird durch Rühren homogenisiert und anschließend in einer kontinuierlich arbeitenden, handelsüblichen Rührwerksmühle, die als Mahlkörper Glasperlen von 0,3 bis 0,4 mm Durchmesser enthält und deren mit ebenen Kreisscheiben versehene Welle mit einer Geschwindigkeit von 100 U/min rotiert, gemahlen, bis die Teilchengröße des Farbstoffs unter 1 bis 2 µm liegt.

Zur Herstellung eines rotstichig gelb gefärbten Polyurethanschaumstoffs werden 0,5 Gew.-% der Farbstoffdispersion durch eine separate Dosierpumpe der Mischkammer der Verschäumungsapparatur gemäß der Deutschen Patentschrift 901 471 zugeführt. Nach intensiver Vermischung der Reaktionskomponenten (die Rezepturen für einen Polyether- und einen Polyesterschaum sind in den folgenden Absätzen beschrieben) erhält man einen gleichmäßig tiefgelb gefärbten Schaumstoff mit einheitlicher Porenweite, der sich durch sehr gute Lichtechtheit und Ausblutechheit auszeichnet.

b) Zur Herstellung eines Polyether-Schaumes werden 100 g eines üblichen trifunktionellen Polyethers, hergestellt aus Trimethylolpropan, Propylenoxid und Ethylenoxid (OH-Zahl 35), 4 g Wasser, 0,6 g eines Polysiloxan-Polyalkylen-Block-Copolymers als Stabilisator, 0,12 g Triethylendiamin als Katalysator, 0,16 g Zinn-octoat und Toluylen-di-isocyanat in einer Menge, die stöchiometrisch zu der eingesetzten Menge des Polyethers und des Wassers ist, eingesetzt.

c) Zur Herstellung eines Polyester-Schaumes werden folgende Komponenten eingesetzt:

100 g eines Polyesters, hergestellt aus Adipinsäure und Diethylenglykol (OH-Zahl 50), 4 g Wasser, 1,4 g N-Methylmorpholin als Katalysator, 1,5 g eines Emulgators, der aus einem Ethylenoxidaddukt an ein Gemisch höherer Alkohole besteht, ein mittleres Molekulargewicht von 1100 und eine OH-Zahl von 52 aufweist, 3,8 g eines sulfonierten Castor-Öls, 0,2 g Paraffinöl und Toluylendiisocyanat in einer Menge, die stöchiometrisch zu der eingesetzten Menge Polyester und Wasser ist.

Beispiel 2

Wie im Beispiel 1 werden Farbstoffdispersionen hergestellt, bei denen das Adipinsäure-propylenglykol-Addukt durch ein Poly-dipropylenglykoladipat mit einer OH-Zahl von 110 bis 111 und einer Säurezahl von 0,2 oder durch ein Kondensationsprodukt aus Adipinsäure und Butandiol(1,3) mit einer OH-Zahl von 114 und einer Säurezahl von 0,36 ersetzt wird.

Auch mit diesen Farbstoffdispersionen werden rotstichig gelbe Ether- bzw. Esterschäume hervorragender Echtheiten erhalten.

Beispiel 3

a) Eine gelbe Farbstoffpaste aus 20 g des in Beispiel 1 genannten Farbstoffs und 80 g eines Polyethers, der durch Umsetzung von 1 Mol Trimethylolpropan und 3 Mol Ethylenoxid erhalten wird und eine OH-Zahl von 550 besitzt, wird wie folgt hergestellt:

In einem Dispersionskneter wird der Farbstoff mit einer solchen Mange des oben genannten Polyethers geknetet, daß man eine zähe, knetbare Masse erhält (auf 1 g Farbstoff werden hierfür ungefähr 0,4 g Polyether eingesetzt). Nach einer Knetzeit von 10 Minuten wird die Masse unter dauerndem Kneten sehr langsam mit der restlichen Menge Polyether verdünnt. Man erhält eine Farbpaste, die für die Färbung von hartem Polyurethan-Integralschaum eingesetzt wird.

b) 100 g eines Polyolgemisches der OH-Zahl 495 und einer Viskosität von 1150 mPa.s bei 25°C, bestehend aus 80 g eines Polyethers der OH-Zahl 550, der durch Anlagerung von Ethylenoxid an Trimethylolpropan erhalten wurde, und 20 g eines Polyesters der OH-Zahl 370, der durch Umsetzung von 1 Mol Adipinsäure, 2,6 Mol Phthalsäureanhydrid, 1,3 Mol Ölsäure und 6,9 Mol Trimethylolpropan erhalten wurde, werden mit 1 g eines Polysiloxan-Polyalkylenoxid-Block-Copolymerisats als Schaumstabilisator, 0,5 g Tetramethylguanidin als Katalysator, 5 g Monofluortrichlormethan als Treibmittel und 5 g

der vorstehend beschriebenen Farbstoffpräparation vermischt. Das Gemisch wird einem Zweikomponenten-Dosiermischgerät zugeführt und dort zur Herstellung des aufschäumenden Reaktionsgemisches mit 155 g eines Polyisocyanates, das durch Phosgenierung von Anilin-Formaldehyd-Kondensaten und anschließende Umsetzung mit einem Diol der OH-Zahl 480 erhalten wurde, eine Viskosität von 130 mPa.s bei 25 °C und einem NCO-Gehalt von 28 Gew.-% aufweist, intensiv vermischt und sofort in ein auf 60 °C temperiertes Metallwerkzeug eingetragen. Nach 7 Minuten Entformungszeit kann das gelb gefärbte Formteil aus hartem Polyurethan-Integralschaumstoff mit einer Rohdichte von 0,6 g/cm$^3$ entformt werden. Verglichen mit einem nicht eingefärbten, rohen Formteil sind die mechanischen Eigenschaften ($\epsilon$-Modul, Biegefestigkeit, Bruchdehnung, Schlagzähigkeit, Formbeständigkeit in der Wärme usw.) des eingefärbten Formteils nicht erniedrigt.

Beispiel 4

100 g eines Ethandiol-Butandiol-Adipinsäurepolyesters vom Molgewicht 2000 (OH-Zahl 56) werden mit einer Paste aus 0,1 g des in Beispiel 1 beschriebenen Farbstoffs und 22 g Butandiol-1,4 sowie 1,2 g n-Octanol (0,037 Mol, bezogen auf Butandiol-1,4) verrührt. Es werden noch 0,3 g Stearylamid und 1 g Stabilisator (2,6,2',6'-Tetraisopropyldiphenylcarbodiimid) zugegeben, die Mischung unter Rühren auf 90 °C erhitzt und mit äquivalenten Mengen 4,4'-Diphenylmethandiisocyanat (74,6 g auf Gesamt-OH bezogen) bei 60 °C unter starkem Rühren vermischt. Anschließend wird die Mischung auf ein Blech gegossen, das erstarrte Produkt granuliert und verspritzt.

Man erhält ein rotstichig gelb gefärbtes Polyurethan-Elastomer-Formteil.

Beispiel 5

a) 482,5 g Hexandiolpolycarbonat vom Molgewicht 1050 werden bei 125 °C und 14 Torr entwässert, man setzt 3,4 g des in Beispiel 1 beschriebenen Farbstoffs bei 120 °C zu, verrührt 10 Minuten, läßt auf 100 °C abkühlen, gibt 76,0 g 1,6-Diisocyanatohexan zu und hält eine Stunde bei 100 °C.

Dann wird auf 60 °C abgekühlt, 4,0 g N-Methyldiethanolamin und 169,5 g Aceton zufließen lassen und 3 Stunden bei 60 °C gehalten.

Nach weiterer Abkühlung auf 50 °C werden 3,1 ml Dimethylsulfat in 400 g Aceton zugegeben und 20 Minuten nachgerührt.

Man erhält 737 g einer 50 %igen Prepolymerlösung in Aceton mit einem NCO-Gehalt von 1,1 %. 743 g Prepolymer werden mit 165 g 1 n Propylendiaminlösung in Wasser und 578 g destilliertem Wasser bei 45 °C unter gutem Rühren vermischt.

Das Aceton wird abdestilliert, der Rückstand mit Wasser gewaschen, durch ein 0,5 mm Sieb gesiebt, abgesaugt und getrocknet.

Man erhält ein rotstichig gelbes, leicht rieselfähiges thermoplastisches Polyurethanpulver mit einem Schmelzpunkt von 135 °C, das für Textilbeschichtungen verwendet wird.

b) Das vorstehend beschriebene Pulver (kugelförmige Teilchen mit einem mittleren Durchmesser von 43 $\mu$m) wird auf ein Trennpapier mit einer Auftragsstärke von 100 g/m$^2$ aufgerakelt und dann in einem Düsenkanal von 12 m Länge und bei einer Bandgeschwindigkeit von 1,5 m/min einer Temperatur von 140 °C ausgesetzt. Es bildet sich eine poröse Folie, die zähelastisch ist, ohne Schwierigkeit vom Träger getrennt und ohne anderweitige Unterstützung gehandhabt werden kann.

c) Die gemäß Absatz b) hergestellte poröse Folie wird in einem 2. Streichvorgang erneut mit dem gleichen Pulver beschichtet (Auftragsstärke: 60 g/m$^2$) und anschließend im Kanal wie in Beispiel 1 beschrieben bei 170 °C behandelt Es entsteht eine homogene rotstichig gelb gefärbte Folie mit einer Gesamtstärke von 160 g/m$^2$ mit hoher Zugfestigkeit, sehr guten elastischen Eigenschaften und hervorragender Lichtechtheit.

d) Die gemäß Absätzen b) und c) gebildeten Folien können auf konventionelle Weise durch ein- oder beidseitige Naßkaschierung mit beliebigen Trägermaterialien wie Baumwollgeweben, Polyestergewegen, Vliesstoffen usw. verbunden werden. Zur Naßkaschierung sind beispielsweise Polyurethanlösungen, Polyurethandispersionen oder andere Klebstoffe geeignet. Die Kaschierung kann aber auch nach dem Prinzip der Heißversiegelung mittels thermoplastischer Kunststoffpulver erfolgen.

e) Eine nach Absatz b) hergestellte poröse Folie wird mit einer Schicht des Polyurethanpulvers aus Absatz a) (Auftragsstärke 80 g/m$^2$) per Rakelauftrag versehen und der Einwirkung einer Temperatur von 145 °C ausgesetzt. Im plastischen Zustand des Pulvers wird unter Druck ein Baumwoll-Nessel (80 g/m$^2$) zukaschiert. Nach dem Abkühlen ist das Laminat fest verbunden und übersteht mehr als 1 000 000 Bally-Flexometer-Knickungen.

Beispiel 6

800 g eines Adipinsäure-Mischpolyesters mit Hexandiol-1,6 und 2,2-Dimethyl-propandiol-1,3 im Molverhältnis 65:35 (OH-Zahl = 65,9), in dem 0,8 g des in Beispiel 1 beschriebenen Farbstoffs fein dispergiert wurden, werden mit 15,5 g N,N-Bis-(β-hydroxy-propyl)-methylamin und 786 g einer Lösung von 260 g Diphenylmethan-4,4-diisocyanat in 650 g Dimethylformamid, die nach einstündigem Stehen einen NCO-Gehalt von 9,21 % aufwies, eine Stunde bei 60 °C und drei Stunden bei 70 bis 80 °C umgesetzt. Der NCO-Gehalt des Voradduktes liegt dann bei 2,37 %, bezogen auf die Festsubstanz.

In 600 g obiger NCO-Voradduktlösung werden bei 50 °C 37,7 g Terephthalsäure-bis-m-aminoanilid eingerührt und nach 3 Stunden mit 20 g Dimethylformamid verdünnt. Nach weiterem Ansteigen der Viskosität wird jeweils mit Dimethylformamid verdünnt, bis nach Zugabe von insgesamt 850 g Dimethylformamid nach ca. 20 Stunden eine homogene Elastomerlösung mit einer Viskosität von 64 Pa.s bei 20 °C erhalten wird. Die inhärente Viskosität der Elastomersubstanz, gemessen in Hexamethylphosphoramid in 1 %iger Lösung bei 25 °C, beträgt 1,30 dl/g. Die Lösung wird mit 1 % Acetanhydrid versetzt und nach üblichem Trockenspinnprozeß versponnen, wobei die Fasern bei der Aufwicklung um 0 bis 30 % vorgedehnt auf Spulen aufgewickelt und so eine Stunde bei 130 °C thermofixiert werden. Ein weiterer Teil der Lösung wird nach dem Naßspinnprozeß versponnen.

Naßspinnprozeß:

Eine 20 %ige Elastomerlösung wird mit einer Fördermenge von ca. 1 ml/min durch eine Düse mit 20 Bohrungen von 0,12 mm Durchmesser in ein 80 bis 85 °C heißes Koagulierbad aus 90 Gew.-% Wasser und 10 Gew.-% Dimethylformamid von ca. 3 m Länge eingesponnen und mit einer Abzugsgeschwindigkeit von 5 m/min nach Passage einer Waschstrecke (Wasser/90 °C) aufgewickelt. Die Spulen werden 1 Stunde in Wasser bei 50 °C aufbewahrt und anschließend getrocknet.

Trockenspinnprozeß:

Eine vorzugsweise 24 bis 26 %ige Elastomerlösung wird durch eine Düse mit 16 Bohrungen von 0,20 mm Durchmesser in einem 5 m langen, auf 220 bis 250 °C beheizten Schacht, in den Luft von ca. 210 bis 280 °C eingeblasen wird, eingesponnen. Die Fäden werden mit einer Geschwindigkeit von ca. 100 m/min abgezogen und nach Präparation mit einer Talkum-Suspension, gegebenenfalls unter Verdehnung, z.B. mit einer Geschwindigkeit von 125 bis 175 m/min aufgewickelt. Die Fäden können anschließend auf Spulen oder in kontinuierlicher Form thermisch nachbehandelt werden. Die Spinngeschwindigkeiten konnen auch höher, z.B. 300 bis 400 m/min, gewählt werden, wobei man auf einen nachträglichen Verdehnungs-Prozeß verzichten kann.

Man erhält rotstichig gelbe hochelastische Fäden mit sehr guten Licht- und Naßechtheiten sowie sehr guten thermischen, hydrothermischen und mechanischen Eigenschaften.

Beispiel 7

a) 35 g des in Beispiel 1 beschriebenen Farbstoffs und 65 g einer 8,5 %igen Lösung einer Polyesterpolyurethans, das durch Umsetzung eines Polyesterharzes aus Hexandiol und Adipinsäure mit einem mittleren Molekulargewicht von 800 mit Toluylendiisocyanat (1,4) hergestellt wurde in Methylethylglykol/Toluol 1:1, werden in einer Perlmühle 12 Stunden gemahlen. Die entstehende Farbpaste ist zur Pigmentierung aller handelsüblichen Zweikomponenten-Polyesterpolyurethan-Textilbeschichtungsmassen geeignet.

b) In einer Lösung, die aus 30 g eines vernetzbaren Polyesterpolyurethans mit endständigen OH-Gruppen und 70 g Ethylacetat besteht, werden langsam 10 g der in Absatz a) beschriebenen gelben Farbpaste eingerührt. Nach kurzer Zeit (3 bis 5 Minuten) erhält man eine stabile Dispersion, die nach Zusatz eines Polyisocyanats, hergestellt durch Umsatz von 1 Mol Trimethylolpropan und 3 Mol Toluylendiisocyanat und eines Schwermetallsalzes als Beschleuniger, für die Beschichtung von Textilien nach dem Umkehr- oder Direktverfahren geeignet ist. Die damit nach bekannten Verfahren hergestellten Polyurethanfilme sind gleichmäßig und stippenfrei licht- und lösungsmittelecht rotstichig gelb gefärbt.

Beispiel 8

In einer 35 %igen Lösung eines phenolverkappten Polyisocyanats mit 12 % NCO und eines verzweigten Polyesters mit einem Hydroxylgehalt von 12 % im Gewichtsverhältnis 2:1 in gleichen Teilen Kresol, Xylol und Glykolmonomethyletheracetat werden 0,3 % des in Beispiel 1 beschriebenen Farbstoffs, bezogen auf Polyestergehalt, gelöst. Der rotstichig gelb angefärbte Lack wird auf Aluminiumfolie mit Hilfe einer 10 µm Lackhantel aufgetragen und anschließend 30 Minuten bei 180 °C eingebrannt.

Die Anfärbung des Lackes bleibt auch nach dem Einbrennen erhalten. Der Farbstoff ist in das ausgehärtete Bindemittel eingebaut. Beim Überlackieren mit einem weißen Einbrennlack, der 30 Minuten bei 130 °C eingebrannt wird, wird kein Durchbluten des Farbstoffes beobachtet.

Beispiele 9 bis 32

Außer dem in den vorstehenden Beispielen eingesetzten Farbstoff wurden auch die Farbstoffe der folgenden Tabelle zum Einfärben von Polyurethankunststoffen in den angegebenen Farbtönen gemäß den Beispielen 1 bis 8 erfolgreich eingesetzt.

| Bsp. | Diazokomponente | Kupplungskomponente | Farbton | $\lambda_{max}$ (DMF) |
|---|---|---|---|---|
| 9 | 4-(2-Hydroxyethyl-sulfonyl-)anilin | N,N-Bis-(2-hydroxyethyl-)anilin | orange | 462 nm |
| 10 | " | N,N-Bis-(2-hydroxyethyl)-3-methyl-anilin | orange | 471 nm |
| 11 | " | N,N-Bis-(2-hydroxypropyl-)anilin | orange | 463 nm |
| 12 | " | N,N-Bis-(2-hydroxybutyl-)anilin | orange | 463 nm |
| 13 | " | N,N-Bis-(2-hydroxyethyl)-3-acetyl-aminoanilin | rot orange | |
| 14 | " | N,N-Bis-(2-hydroxyethyl)-2,5-dimethoxyanilin | orange | |
| 15 | " | N-(2-Hydroxyethyl-)anilin | rotstichig gelb | |
| 16 | " | N-Methyl-N-(2-hydroxyethyl-)-anilin | orange | 459 nm |
| 17 | " | N-Ethyl-N-(2-hydroxyethyl-)anilin | orange | 460 nm |
| 18 | " | N-(2-Cyanoethyl-)N-(2-hydroxy-ethyl-)anilin | orange | 456 nm |
| 19 | " | 2-(2-Hydroxyethylthio-)N,N-bis-(2-hydroxyethyl-)ani-lin | orange | |
| 20 | " | N-Benzyl-N-(2-hydroxyethyl-)-anilin | orange | 458 nm |
| 21 | " | N,N-Bis-(2-(2-Hydroxyethyloxy)-ethyl-)anilin | orange | 464 nm |
| 22 | 3-(2-Hydroxyethyl-sulfonyl-)anilin | N,N-Bis-(2-hydroxyethyl-)-3-methylanilin | rotstichig gelb | 451 nm |
| 23 | " | 2-(2-Hydroxyethylthio-)N-(2-hydroxyethyl-)anilin | rotstichig gelb | 428 nm |

| Bsp. | Diazokomponente | Kupplungskomponente | Farbton | $\lambda_{max}$ (DMF) |
|---|---|---|---|---|
| 24 | 2-(2-Hydroxyethylsulfonyl-)-anilin | N,N-Bis-(2-hydroxyethyl-)3-methyl-anilin | orange | 467 nm |
| 25 | " | 2-(2-Hydroxyethylthio-)N-(2-hydroxyethyl-)anilin | rotstichig gelb | 437 nm |
| 26 | 4-(2-Hydroxyethylsulfonyl)-3-methylanilin | " | rotstichig gelb | 436 nm |
| 27 | 4-(2-Hydroxyethylsulfonyl)-3-chloranilin | " | rotstichig gelb | 440 nm |
| 28 | 6-(2-Hydroxyethylsulfonyl-)-naphthyl-2-amin | " | rotstichig gelb | 402 nm |
| 29 | " | N,N-Bis-(2-hydroxyethyl-)3-methylanilin | orange | 474 nm |
| 30 | 4-(2-Hydroxyethylsulfonyl-methyl)-anilin | N,N-Bis-(2-hydroxyethyl-)3-methylanilin | gelb | |
| 31 | 4-[2-(2-Hydroxyethyl-sulfonyl-)ethyl-]anilin | " | gelb | |
| 32 | 4-(2-Hydroxyethylsulfonyl-)-anilin | 3-(2-Hydroxyethylthio-)N-(2-hydroxyethyl-)anilin | rotstichig gelb | |

Beispiel 33

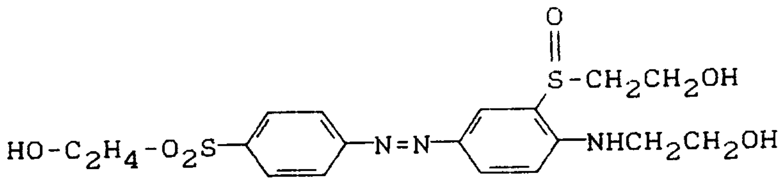

Eine Suspension von 140 g des Farbstoffes aus Beispiel 1 wird in einer Lösung von 2000 ml Wasser und 100 g Kochsalz mit 4,1 g Natriumacetat und 3,0 ml Essigsäure auf pH 3-4 gestellt und dann mit 0,2 g Wolfram-VI-oxid und 140 ml 35 %igem Wasserstoffperoxid 12 Stunden bei Raumtemperatur gerührt. Der erhaltene Niederschlag wird abgesaugt und gut mit Wasser nachgewaschen. Man erhält 120 g des Farbstoffes der obigen Formel. $\lambda_{max}$ (DMF): 420 nm.

Zum selben Ergebnis gelangt man, wenn man 76 g 4-(2-Hydroxyethylsulfonyl-)anilin diazotiert und bei 10 °C und pH 3-4 auf 102 g 2-(2-Hydroxyethylthio-)N-(2-hydroxyethyl-)-anilin (80 %ige Ware) kuppelt und die so erhaltene Farbstoffsuspension mit 140 ml Wasserstoffperoxid und 0,2 g Wolfram-VI-oxid 12 Stunden bei Raumtemperatur oxidiert.

Der erhaltene Farbstoff wird analog Beispiel 1 bis 8 eingesetzt, wobei man rotstichig gelbe Färbungen erhält.

Beispiel 34

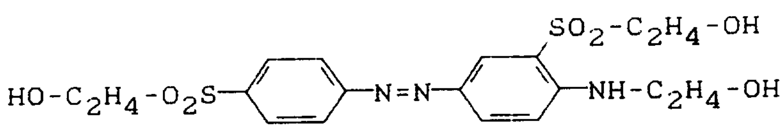

Analog zur Darstellung im Beispiel 33, nur wird die Oxidation 1 Stunde bei 85 °C durchgeführt. Ausbeute: 123 g, $\lambda_{max}$ (DMF): 411 nm. Entsprechend der Beispiele 1 bis 8 gefärbt, erhält man rotstichig gelbe Färbungen.

Beispiele 35 bis 44

Setzt man weitere Thioether analog zu den Beispielen 33 und 34 zu Sulfoxiden bzw. Sulfonen um und färbt diese analog zu den Beispielen 1 bis 8 aus, so erhält man Farbstoffe der Formel

D - N = N - K

mit den in der folgenden Tabelle angegebenen Farbtönen.

| Bsp. | D | K | Farbton | $\lambda_{max}$ (DMF) |
| --- | --- | --- | --- | --- |
| 35 | 4-(2-Hydroxyethylsulfonyl-)-phenyl | 2-(2-Hydroxyethylsulfoxidyl)-N,N-bis-(2-hydroxy-)-aminophenyl-(4) | rotstichig gelb | |
| 36 | " | 2-(2-Hydroxyethylsulfonyl)-N,N-bis-(2-hydroxy-)-aminophenyl-(4) | rotstichig gelb | |
| 37 | " | 3-(2-Hydroxyethylsulfoxidyl)N-(2-hydroxyethyl-)-aminophenyl-(4) | rotstichig gelb | |
| 38 | " | 3-(2-Hydroxyethylsulfonyl-)N-(2-hydroxyethyl-)-aminophenyl-(4) | rotstichig gelb | |
| 39 | 3-(2-Hydroxyethylsulfonyl-)-phenyl | 2-(2-Hydroxyethylsulfoxidyl-)N-(2-hydroxyethyl-)-aminophenyl-(4) | rotstichig gelb | 413 nm |
| 40 | " | 2-(2-Hydroxyethylsulfonyl-)N-(2-hydroxyethyl-)-aminophenyl-(4) | rotstichig gelb | 403 nm |
| 41 | 2-(2-Hydroxyethylsulfonyl-)-phenyl | " | rotstichig gelb | 411 nm |
| 42 | " | 2-(2-Hydroxyethylsulfoxidyl-)N-(2-hydroxyethyl-)-aminophenyl-(4) | rotstichig gelb | 421 nm |
| 43 | 6-(2-Hydroxyethylsulfonyl-)-naphthyl-2 | " | rotstichig gelb | 422 nm |
| 44 | " | 2-(2-Hydroxyethylsulfonyl-)N-(2-hydroxyethyl-)-aminophenyl-(4) | rotstichig gelb | 413 nm |

## Patentansprüche

1. Verfahren zum Färben von Polyurethankunststoffen mit Farbstoffen, dadurch gekennzeichnet, daß man vor oder während der Polyadditionsreaktion dem Reaktionsgemisch oder einer der Edukt-Komponenten

wenigstens einen Farbstoff der Formel

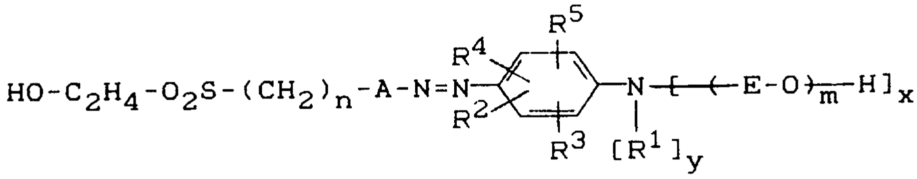

(I)

zusetzt, worin

| | |
|---|---|
| A | für gegebenenfalls durch Alkyl oder Halogen substituiertes Phenylen oder Naphthylen steht, |
| E | für $C_1$-$C_4$-Alkylen steht, |
| $R^1$ | für Wasserstoff oder für einen $C_1$-$C_6$-Alkylenrest, der gegebenenfalls durch -Cl, -CN, Amino, Alkylamino, Dialkylamino, $C_1$-$C_4$-Alkoxycarbonyl, Aminocarbonyl und/oder Phenyl substituiert ist, steht, |
| $R^2$, $R^3$, $R^4$ und $R^5$ | unabhängig voneinander für Waserstoff, Halogen, Hydroxy, Amino, Acylamino, $C_1$-$C_6$-Alkyl oder gegebenenfalls durch Hydroxy oder $C_1$-$C_4$-Alkylenoxideinheiten substituiertes $C_1$-$C_6$-Alkoxy, mono- oder di-$C_1$-$C_6$-Alkylamino, $C_1$-$C_6$-Alkylthio, $C_1$-$C_6$-Alkylsulfoxid oder $C_1$-$C_6$-Alkylsulfonyl stehen oder zwei dieser Reste einen ankondensierten Benzolring vervollständigen, der gegebenenfalls substituiert ist, |
| m | für eine Zahl von 1 bis 4, |
| n | für eine Zahl von 0 bis 2, |
| x | für 1 oder 2, |
| y | für 0 oder 1 steht, |

wobei die Summe aus x und y gleich 2 ist.

**2.** Verfahren zum Färben von Polyurethankunststoffen gemäß Anspruch 1 mit wenigstens einem Farbstoff der Formel

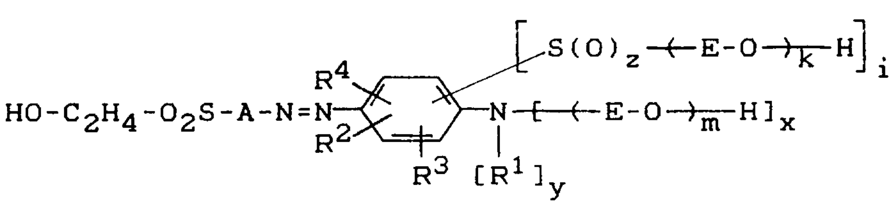

(II)

worin

| | |
|---|---|
| A | für 1,2-, 1,3- oder 1,4-Phenylen oder 2,6-Naphthylen steht, was gegebenenfalls durch Methyl, Ethyl, Chlor oder Brom substituiert ist, |
| $R^2$, $R^3$ und $R^4$ | unabhängig voneinander für Wasserstoff, Methyl, Ethyl, n-Propyl, iso-Propyl, Chlor, Acylamino oder Methoxy stehen, |
| i | die Zahl 0 oder 1, |
| k | eine Zahl von 1 bis 4, |
| z | eine Zahl von 0 bis 2 bedeuten |

und

E, $R^1$, m, x und y die in Anspruch 1 genannten Bedeutungen besitzen.

**3.** Verfahren zum Färben von Polyurethankunststoffen gemäß mindestens einem der Ansprüche 1 oder 2 mit wenigstens einem Farbstoff der Formel

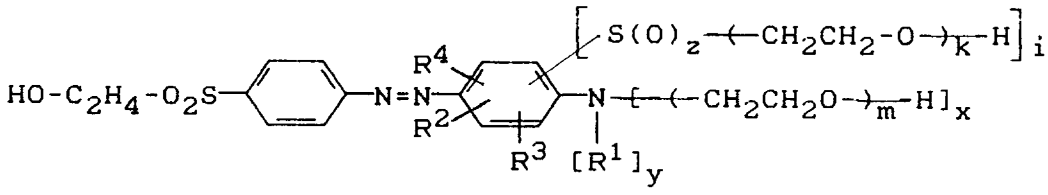

(III)

worin

| | |
|---|---|
| $R^1$ | für Wasserstoff, Methyl, Ethyl, Benzyl oder 2-Cyanoethyl und |
| $R^2$, $R^3$ und $R^4$ | unabhängig voneinander für Wasserstoff, Methyl, Ethyl, Methoxy, Acetylamino oder Chlor stehen |

und i, k, m, x, y und z die in Anspruch 2 aufgeführten Bedeutungen haben.

**4.** Verfahren zum Färben von Polyurethankunststoffen gemäß wenigstens einem der Ansprüche 1 bis 3 mit wenigstens einem der folgenden Farbstoffe:

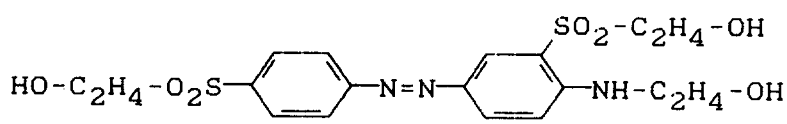

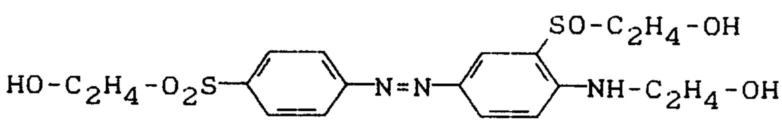

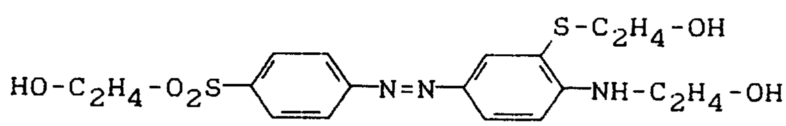

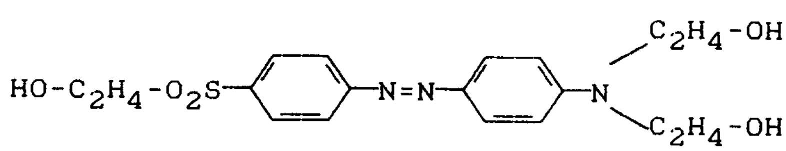

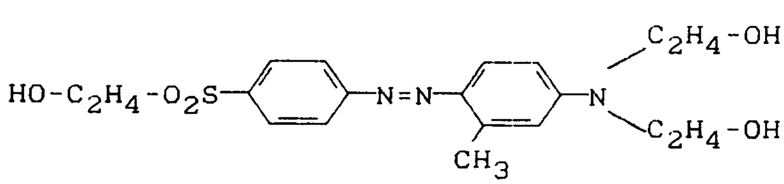

**5.** Nach mindestens einem der Ansprüche 1 bis 4 gefärbte Polyurethankunststoffe.

**6.** Farbstoffe der Formel

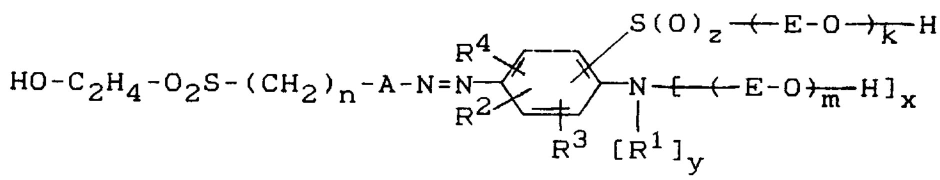

(VI)

worin

| | |
|---|---|
| A | für gegebenenfalls durch Alkyl oder Halogen substituiertes Phenylen oder Naphthylen steht, |
| E | für $C_1$-$C_4$-Alkylen steht, |
| $R^1$ | für Wasserstoff oder für einen $C_1$-$C_6$-Alkylenrest, der gegebenenfalls durch -Cl, -CN, Amino, Alkylamino, Dialkylamino, $C_1$-$C_4$-Alkoxycarbonyl, Aminocarbonyl und/oder Phenyl substituiert ist, steht, |
| $R^2$, $R^3$ und $R^4$ | unabhängig voneinander für Wasserstoff, Halogen, Hydroxy, Amino, Acylamino, $C_1$-$C_6$-Alkyl oder gegebenenfalls durch Hydroxy oder $C_1$-$C_4$-Alkylenoxideinheiten substituiertes $C_1$-$C_6$-Alkoxy, mono- oder di-$C_1$-$C_6$-Alkylamino, $C_1$-$C_6$-Alkylthio, $C_1$-$C_6$-Alkylsulfoxid oder $C_1$-$C_6$-Alkylsulfonyl stehen oder zwei dieser Reste einen ankondensierten Benzolring vervollständigen, der gegebenenfalls substituiert ist, |
| m | für eine Zahl von 1 bis 4, |
| n | für eine Zahl von 0 bis 2, |
| x | für 1 oder 2, |
| y | für 0 oder 1, |
| z | für eine Zahl von 0 bis 2, |
| k | für eine Zahl von 1 bis 4 steht, |

wobei die Summe aus x und y gleich 2 ist,
mit Ausnahme der Farbstoffe

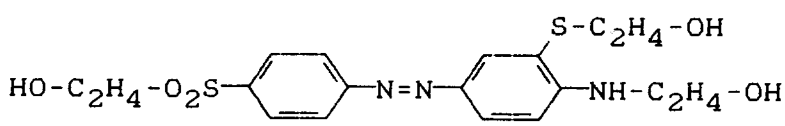

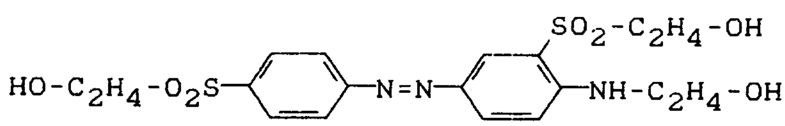

**7.** Farbstoffe gemäß Anspruch 6 der Formel

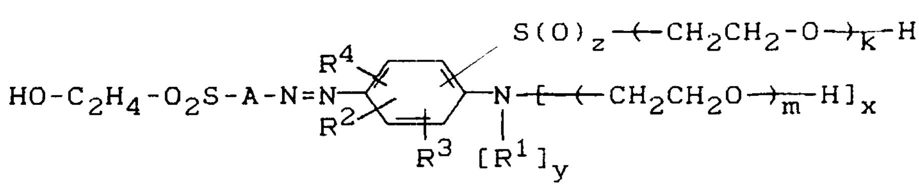

(VII)

worin

A für 1,2-, 1,3- oder 1,4-Phenylen oder 2,6-Naphthylen steht, das gegebenenfalls durch Methyl, Ethyl, Chlor oder Brom substituiert ist,

$R^2$, $R^3$ und $R^4$ unabhängig voneinander für Wasserstoff, Methyl, Ethyl, n-Propyl, iso-Propyl, Chlor, Acylamino oder Methoxy stehen,

und

$R^1$, k, m, x, y und z die in Anspruch 6 genannten Bedeutungen besitzen.

**8.** Farbstoffe der gemäß Anspruch 6 der Formel

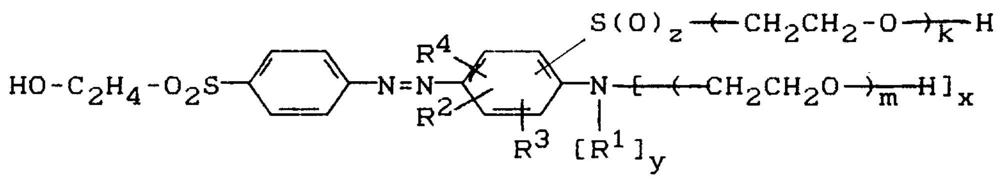

(VIII)

worin

$R^1$ für Wasserstoff, Methyl, Ethyl, Benzyl oder 2-Cyanoethyl steht und

$R^2$, $R^3$ und $R^4$ unabhängig voneinander für Wasserstoff, Methyl, Ethyl, Methoxy, Acetylamino oder Chlor stehen

und k, m, x, y und z die in Anspruch 6 angeführten Bedeutungen haben.

Europäisches Patentamt

# EUROPÄISCHER RECHERCHENBERICHT

Nummer der Anmeldung
EP 93 11 2043

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | EP-A-0 431 389 (BAYER AG)<br>* Beispiele 18,19 *<br>--- | 6-8 | C09B62/51<br>C08G18/38<br>C09B29/08 |
| P,A | EP-A-0 520 241 (BAYER AG)<br>* Beispiele 10b,15b *<br>--- | 6-8 | |
| A | EP-A-0 051 808 (HOECHST AG)<br>* Zusammenfassung *<br>--- | 6 | |
| A<br><br>D | DE-A-24 26 171 (BAYER AG)<br>* Beispiele *<br>& GB-A-1 472 379<br>--- | 1-8 | |
| D,A | US-A-4 271 072 (WENGHOEFER ET. AL.)<br>* Spalte 2, Zeile 32 - Zeile 49 *<br>--- | 6-8 | |
| A | EP-A-0 181 585 (HOECHST AG)<br>* Seite 13, Zeile 5 - Zeile 7 *<br>* Seite 14, Zeile 13 - Zeile 15 *<br>--- | 6-8 | |
| A | DE-A-24 26 172 (BAYER AG)<br>* Beispiele *<br>--- | 1-8 | **RECHERCHIERTE SACHGEBIETE (Int.Cl.5)** |
| D,A | US-A-4 751 254 (KLUGER ET. EL.)<br>* Zusammenfassung; Tabelle 4 *<br>----- | 1-8 | C09B<br>C08G |

Der vorliegende Recherchenbericht wurde für alle Patentansprüche erstellt

| Recherchenort | Abschlußdatum der Recherche | Prüfer |
|---|---|---|
| DEN HAAG | 23. November 1993 | KETTERER, M |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)